(19) Europäisches Patentamt / European Patent Office / Office européen des brevets

(11) **EP 2 702 275 B1**

(12) **FASCICULE DE BREVET EUROPEEN**

(45) Date de publication et mention de la délivrance du brevet:
**20.09.2017 Bulletin 2017/38**

(21) Numéro de dépôt: **12717728.5**

(22) Date de dépôt: **27.04.2012**

(51) Int Cl.:
**F04B 43/04** *(2006.01)*

(86) Numéro de dépôt international:
**PCT/EP2012/057852**

(87) Numéro de publication internationale:
**WO 2012/146753 (01.11.2012 Gazette 2012/44)**

(54) **MICROPOMPE À DÉBITMÈTRE ET SON PROCÉDÉ DE RÉALISATION**

MIKROPUMPE MIT DURCHFLUSSMESSER UND HERSTELLUNGSVERFAHREN DAFÜR

MICROPUMP HAVING A FLOWMETER, AND METHOD FOR PRODUCING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2011 FR 1153644**

(43) Date de publication de la demande:
**05.03.2014 Bulletin 2014/10**

(73) Titulaire: **Commissariat à l'Énergie Atomique et aux Énergies Alternatives
75015 Paris (FR)**

(72) Inventeurs:
• **FOUILLET, Yves**
**F-38340 Voreppe (FR)**
• **FUCHS, Olivier**
**F-38000 Grenoble (FR)**

(74) Mandataire: **Ahner, Philippe et al
BREVALEX
95, rue d'Amsterdam
75378 Paris Cedex 8 (FR)**

(56) Documents cités:
**EP-A1- 0 435 653 US-A- 4 596 575
US-A1- 2005 123 420**

**Description**

**DOMAINE TECHNIQUE ET ART ANTÉRIEUR**

La présente invention concerne le domaine général de la microfluidique, et porte sur un procédé de fabrication d'une micropompe à membrane déformable, munie d'un débitmètre à membrane déformable, ainsi que sur une micropompe à membrane déformable munie d'un débitmètre.

Les micropompes permettent d'assurer l'écoulement contrôlé d'un fluide dans un microcanal. Elles peuvent intervenir dans de nombreux systèmes microfluidiques tels que, à titre d'exemples, des laboratoires sur puce, des systèmes d'injection de substances médicales ou encore des circuits hydrauliques de refroidissement de puces électroniques.

L'écoulement du fluide peut être obtenu de différentes manières, selon que l'on agit mécaniquement ou non sur le fluide d'intérêt. Une présentation des différentes techniques peut être trouvée dans l'article de Nguyen et al. intitulé « MEMS-Micropumps: A Review », 2002, J. Fluid. Eng., Vol. 124, 384-392.

Les micropompes à membrane déformable appartiennent à la première catégorie de micropompes dans laquelle une action mécanique est appliquée au fluide par l'intermédiaire de ladite membrane, de manière à provoquer le déplacement du fluide dans le microcanal.

Le document US2005/0123420 décrit un exemple d'une telle micropompe comportant trois membranes déformables, dont une membrane centrale de pompage et deux membranes secondaires amont et aval.

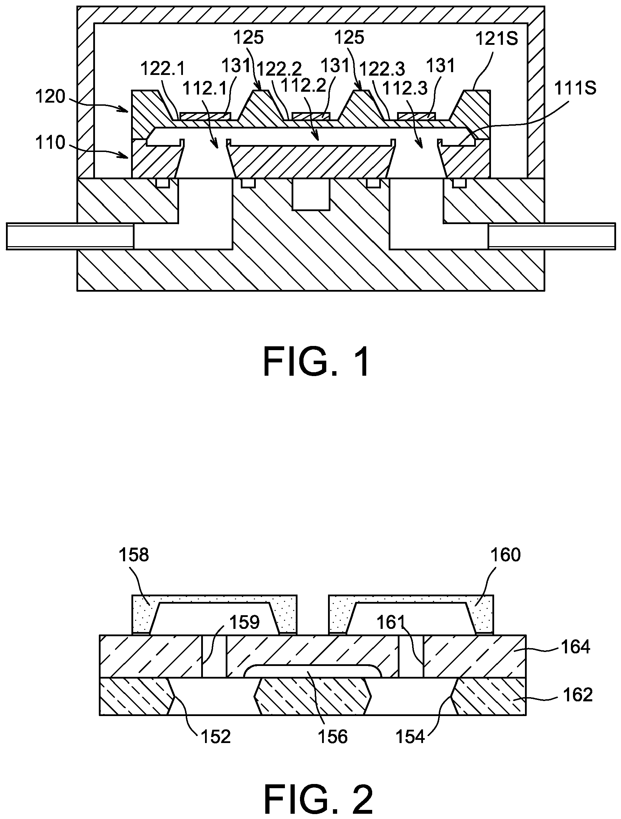

Comme l'illustre la figure 1, cette micropompe comporte un premier substrat 110 et un second substrat 120 assemblés l'un à l'autre de manière à former un microcanal.

Le premier substrat 110 comporte trois cavités 112-1, 112-2, 112-3 formées dans la face supérieure 111S du substrat et connectées en série.

Le second substrat 120 comporte trois membranes déformables 122-1, 122-2, 122-3 disposées en regard desdites cavités. Il est à noter que le second substrat 120 est formé d'un seul tenant, les membranes déformables étant alors une partie dudit substrat et non pas des pièces rapportées.

La membrane centrale 122-2 et la cavité correspondante 112-2 délimitent ensemble la chambre de pompage de la micropompe. Les membranes amont 122-1 et aval 122-3 forment, avec leurs cavités correspondantes 112-1 et 112-3, des vannes actives.

La déformation des membranes est obtenue à l'aide de pastilles piézoélectriques 131 disposées sur la face supérieure 121S des membranes.

L'écoulement du fluide d'intérêt dans le microcanal de la micropompe est obtenu par déformation contrôlée de la membrane qui augmente ou diminue le volume de la chambre de pompage, conjointement avec l'action des vannes amont et aval.

Il s'avère que, pour certaines applications, on cherche à mesurer le débit de la pompe. C'est le cas par exemple des pompes de délivrance de médicament implantables.

Les pompes à membranes péristaltiques de l'état de l'art n'intègrent pas de capteurs permettant de mesure le débit. La seule solution est de connecter un débitmètre en aval ou en amont de la pompe, ce qui complique la réalisation et la miniaturisation du dispositif implantable. Par ailleurs, pour éviter tout biais de mesure, il serait préférable de réaliser la mesure au plus près de la pompe ou même dans la pompe.

Il existe de nombreuses méthodes pour mesurer les débits (fil chaud, effet Coriolis...).

Une méthode consiste à utiliser deux capteurs de pression disposés consécutivement dans un passage fluidique et séparés par une restriction fluidique. La différence de pression (appelée perte de charge) induite par la dissipation visqueuse dans la restriction fluidique est mesurée par les deux capteurs de pression. Il y a une relation de proportionnalité connue entre le débit et la différence de pression. Ainsi, la mesure de la différence de pression permet de déterminer le débit.

Un exemple de débitmètre formé de deux capteurs de pression distincts est illustré en figure 2 et est décrit dans les documents US6446513B1, US20050204828A1 ainsi que dans l'article de R. E. Oosterbroek et al., paru dans Sensor Actuat a-Phys 77, 167 (1999). Le fluide passe par un canal central 156 après être entré par une ouverture d'entrée 152 disposée dans la partie inférieure du dispositif. Il ressort par une ouverture de sortie 154, également disposée dans la partie inférieure du dispositif. Des capteurs piézo-résistifs 158, 160 permettent de mesurer les variations de pression, d'une part dans la partie d'entrée, en amont du canal 156, d'autre part dans la partie de sortie, en aval du canal 156. Le dispositif est réalisé à l'aide de deux substrats 162, 164, les canaux d'entrée 152 et de sortie 154 étant réalisés dans le substrat 162 inférieur, le canal central étant quant à lui réalisé dans la partie inférieure du substrat supérieur 164, dans lequel deux canaux traversants permettent un accès aux capteurs piézo-résistifs, respectivement du côté de l'entrée et du côté de la sortie du dispositif.

De manière plus générale il n'existe que très peu d'exemples de pompe fondés sur les technologies MEMS qui intègrent des capteurs mesurant la pression ou le débit de l'écoulement et pas de pompe à membrane, notamment réalisée en technologie MEMS, qui intègre un débitmètre fiable et précis.

**EXPOSÉ DE L'INVENTION**

On décrit ici une micro pompe à membrane déformable comportant :

- une première chambre, dite chambre de pompage, dont une paroi comporte une première membrane déformable et des moyens d'actionnement de cette première portion de membrane,
- une deuxième chambre munie d'une deuxième membrane déformable, ou deuxième portion de membrane déformable, et une troisième chambre, munie d'une troisième membrane déformable, ou troisième portion de membrane déformable, la deuxième chambre et la troisième chambre étant reliées entre elles par un premier canal, au moins l'une d'entre elles étant reliée par un deuxième canal à la première chambre.

Chacune des deuxième chambre et troisième chambre comporte des moyens de détection - par exemple sous la forme d'au moins une jauge de détection - pour détecter une déformation de la portion correspondante de membrane sous l'action d'un fluide circulant dans la micropompe, mais n'est pas munie de moyens d'activation.
On décrit donc une pompe à membrane, réalisée par exemple en technologie MEMS, comprenant d'une part au moins une chambre de pompage et, d'autre part, au moins deux chambres dédiées à la mesure du débit, comportant chacune des moyens de détection, par exemple au moins une jauge, ces deux chambres étant séparés par une perte de charge a géométrie fixe.
Par exemple :

- chacune des deuxième chambre et troisième chambre est munie de 4 jauges formant un pont de Wheastone,
- ou bien chacune des deuxième chambre et troisième chambre est munie de 2 jauges, ces 4 jauges formant un pont de Wheastone ; on cherche alors, de préférence, à ce que les 4 jauges du pont de Wheastone ne soient pas toutes parallèles les unes des autres, et/ou les 2 jauges du pont et d'une même membrane ne soient pas parallèles entre elles, et/ou à ce que le pont de Wheastone comporte deux jauges successives parallèles l'une par rapport à l'autre.

Chacune des deuxième chambre et troisième chambre peut être munie de 2 jauges, ces 4 jauges formant un pont de Wheastone et ayant des valeurs nominales identiques.
Plusieurs configurations peuvent être mises en oeuvre, par exemple :

- la deuxième chambre et la troisième chambre peuvent être toutes deux situées d'un même côté de la première chambre, l'une d'entre elles seulement étant reliée par le deuxième canal à la première chambre,
- ou bien la deuxième chambre et la troisième chambre peuvent être situées de part et d'autre de la première chambre, chacune étant reliée par un canal à la première chambre.

Ce dispositif peut comporter en outre au moins une quatrième chambre, reliée à l'une des autres chambres et munie d'une quatrième membrane déformable et de moyens d'actionnement de cette quatrième membrane.
La quatrième chambre, sa portion de membrane déformable et ses moyens d'actionnement peuvent former une vanne.
De préférence, le dispositif comporte une cinquième chambre, reliée à l'une des autres chambres, et munie d'une cinquième membrane déformable et de moyens d'actionnement de cette cinquième membrane. La cinquième chambre, sa portion de membrane déformable et ses moyens d'actionnement peuvent former une vanne.
Dans ce cas, les première, quatrième et cinquième membranes sont actionnées de façon à générer un effet péristaltique entre l'entrée et la sortie de la chambre, comme cela est par exemple décrit dans la demande FR09 57995, non publiée au moment du dépôt de la présente demande ; autrement dit, l'écoulement du fluide d'intérêt dans la micropompe est obtenu par déformation contrôlée de la 1ère, de la 4ème et de la 5ème membrane, déformation qui augmente ou diminue le volume de la chambre correspondante.
Selon ce mode de réalisation, la quatrième chambre peut être appelée chambre d'entrée et la cinquième chambre peut être appelée chambre de sortie. Dans ce cas, le fluide pompé passe successivement par la quatrième chambre, la première chambre et la cinquième chambre. Les deuxième et troisième chambres sont alors disposées entre la quatrième chambre et la cinquième chambre.
De préférence, un conduit débouche à l'intérieur de la quatrième chambre, et/ou de la 5ème chambre, par une ouverture bordée d'une lèvre en saillie à l'intérieur de ladite quatrième chambre parallèlement à ladite quatrième membrane déformable et/ou 5ème membrane déformable.
Les différentes membranes déformables peuvent être des portions d'une même membrane dont l'épaisseur est, par exemple comprise entre 10 $\mu$m et 300 $\mu$m.

Chaque membrane recouvre la chambre à laquelle elle est liée ou associée ou dont elle forme l'une des parois ou au moins une partie de l'une de ses parois, la liaison étant réalisée selon une zone dite zone d'encastrement.

Chacune des deuxième et troisième membranes comporte un moyen de mesure de la déformation de la membrane. Ce moyen peut être une jauge de déformation, ou jauge de contrainte, piézoélectrique ou piézorésistive.

De préférence, chaque jauge est placée à l'endroit de la membrane où on peut mesurer une déformation maximale, c'est-à-dire au niveau de la zone d'encastrement.

Selon un autre mode de réalisation, chacune des troisième et quatrième membranes comportent quatre jauges de contrainte montées en pont de Wheastone. Avantageusement, dans ce cas, les jauges disposées sur une même membrane sont disposées parallèlement les unes des autres.

Selon un mode de réalisation préféré, les troisième et quatrième membranes comportent chacune deux jauges, disposées perpendiculairement l'une de l'autre, l'une étant orientée de manière tangente à l'encastrement. Les quatre jauges, formées sur les troisième et quatrième membranes, sont alors montées selon un même pont de Wheastone.

Les jauges peuvent être disposées et/ou avoir l'une et/ou l'autre des caractéristiques suivantes :

- chacune des jauges est localisée au voisinage de l'encastrement ou du bord de la membrane correspondant à la chambre à laquelle cette jauge est associée,
- chacune des jauges a une largeur comprise entre 1 $\mu$m et 10 $\mu$m et une longueur comprise entre 10 $\mu$m et 100 $\mu$m.

On décrit également un procédé de réalisation d'un débitmètre, notamment du type décrit ci-dessus, comportant au moins les étapes suivantes :

a) on sélectionne un premier substrat et un deuxième substrat,
b) on réalise les chambres et le premier canal dans le premier substrat,
c) on assemble le premier substrat avec le deuxième substrat,
d) puis on réalise une membrane déformable, par amincissement du deuxième substrat,
e) on forme les moyens de détection de la déformation de membranes, sur ou dans ladite membrane, au moins un tel moyen étant positionné au dessus de la deuxième chambre et au moins un tel moyen étant positionné au dessus de la troisième chambre,
f) on forme des moyens d'actionnement au moins sur la première membrane.

La membrane déformable peut être réalisée par amincissement du deuxième substrat à partir de la face supérieure de celui-ci, par polissage mécanique, ou par polissage mécano-chimique et/ou par gravure.

Le deuxième substrat peut être de type SOI, comportant un substrat semi-conducteur, une couche diélectrique et une couche en matériau semi-conducteur, la couche diélectrique pouvant servir de couche d'arrêt lors de l'amincissement du deuxième substrat.

Un tel procédé peut en outre comporter :

- une étape de réalisation d' une quatrième chambre, reliée à l'une des autres chambres et munie d'une quatrième membrane déformable, et une étape de réalisation de moyens d'actionnement de cette quatrième membrane,

Un tel procédé peut comporter, en outre :

- une étape de réalisation d'une cinquième chambre, reliée à l'une des autres chambres, et munie d'une cinquième membrane déformable, et une étape de réalisation de moyens d'actionnement de cette cinquième membrane,
- et/ou une étape de réalisation de conduits d'entrée et de sortie dans le premier substrat, les conduits d'entrée et de sortie pouvant être d'abord réalisés borgnes dans le premier substrat, puis étant rendus traversant, par amincissement du premier substrat.

Les étapes de réalisation des chambres et des canaux peuvent être mises en oeuvre simultanément, selon des techniques de gravure sèche ou de gravure humide.

L'étape d'assemblage peut être réalisée par scellement moléculaire, par scellement anodique, eutectique, ou par collage. Elle peut être réalisée sous vide.

De préférence, l'amincissement du premier substrat est réalisé alors que au moins les chambres et le canal sont sous vide ou sous très faible pression.

En ce qui concerne les jauges, celles-ci peuvent être réalisées par dépôt métallique sur la membrane ou par dopage d'un matériau semi-conducteur.

## BRÈVE DESCRIPTION DES DESSINS

On décrira à présent, à titre d'exemples non limitatifs, des modes de réalisation de l'invention, en se référant aux dessins annexés, dans lesquels :

les figures 1 et 2, déjà décrites, sont une vue en coupe transversale, respectivement, d'une pompe à membrane selon un exemple de l'art antérieur et d'un microdébitmètre selon un exemple de l'art antérieur ;
la figure 3 est une vue en coupe de la partie débitmètre d'une micropompe décrite dans la présente demande,
les figures 4A, et 4B sont des vues schématiques de schémas électriques de montage de capteurs associés à un débitmètre,
la figure 5 est une vue en coupe de la partie débitmètre d'une micropompe décrite dans la présente demande,
les figures 6A, 6B sont des vues schématiques de schémas électriques de montage de capteurs associés à un débitmètre,
la figure 7 est une vue de dessus de la partie débitmètre d'une micropompe décrite dans la présente demande,
la figure 8 est une vue en coupe d'une micropompe décrite dans la présente demande,
la figure 9 est une vue de dessus d'une micropompe décrite dans la présente demande,
les figures 10A, 10B sont des vues de dessus de micropompes décrites dans la présente demande,
les figures 11A-11F représentent schématiquement diverses étapes d'un procédé de réalisation d'un débitmètre décrites dans la présente demande,
les figures 12 et 13 sont des résultats de mesures de débits obtenus respectivement avec une micropompe mettant en oeuvre un débitmètre extérieur et avec une micropompe avec un débitmètre intégré.

## EXPOSÉ DÉTAILLÉ DE MODES DE RÉALISATION PARTICULIERS

Dans la suite, lorsqu'on parle de « substrat » on peut également comprendre une « couche». Par conséquent on utilise indifféremment l'un ou l'autre de ces termes.

Il est à noter que, sur les dessins, les échelles ne sont pas respectées, pour privilégier la clarté du dessin.

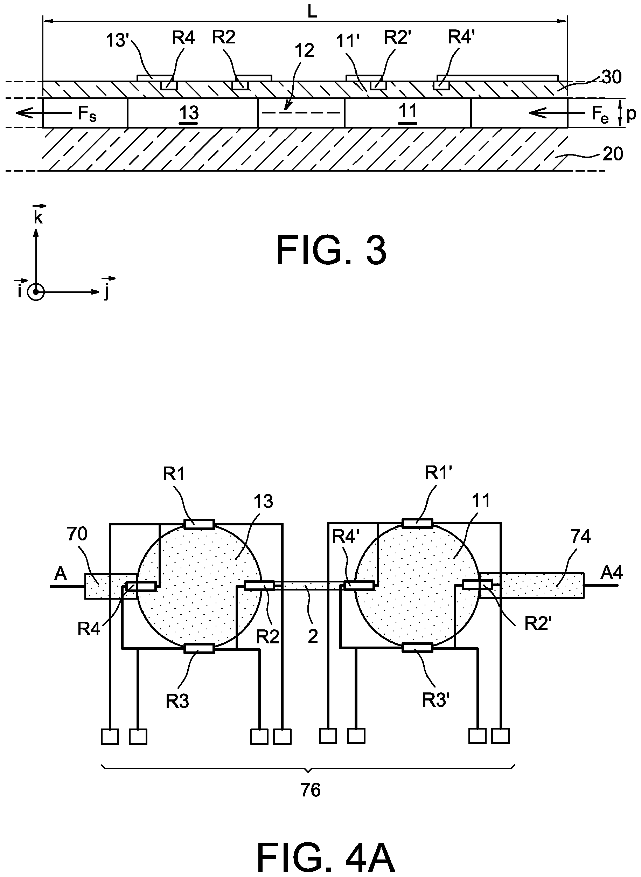

Dans toute la description qui va suivre, on utilise un repère orthonormé (i,j,k), comme représenté sur la figure 3.

Par ailleurs, les termes « inférieur » et « supérieur » utilisés par la suite sont ici à comprendre en termes d'orientation suivant la direction k du repère orthonormé (i,j,k).

Les termes « épaisseur », « hauteur » et « profondeur » sont à comprendre en termes de mesure ou de distance suivant la direction k du même repère orthonormé (i,j,k).

On présente d'abord les moyens permettant de mesurer un débit dans une micropompe péristaltique.

Un premier exemple de ces moyens est illustré en figures 3 et 4A-4B. La figure 3 est une vue en coupe le long d'un plan dont on voit la trace AA' en figure 4A (vue de dessus).

Un tel dispositif comporte 2 membranes 11', 13' disposées en regard de 2 cavités (ou chambres) 11, 13. Ces dernières sont reliées entre elles par un petit canal 12 de petite section. Ce canal va imposer une perte de charge à un liquide qui circule comme indiqué par des flèches Fe (flux d'entrée) et Fs (flux de sortie) sur la figure 3. Il provient d'une autre partie du dispositif, dont on verra des exemples plus loin, ou directement d'une source extérieure ; il passe dans la cavité 11, puis par la restriction ou le canal 12 et enfin la cavité 13 pour continuer comme indiqué par la flèche Fs, là encore faire une autre partie du dispositif ou vers un écoulement extérieur.

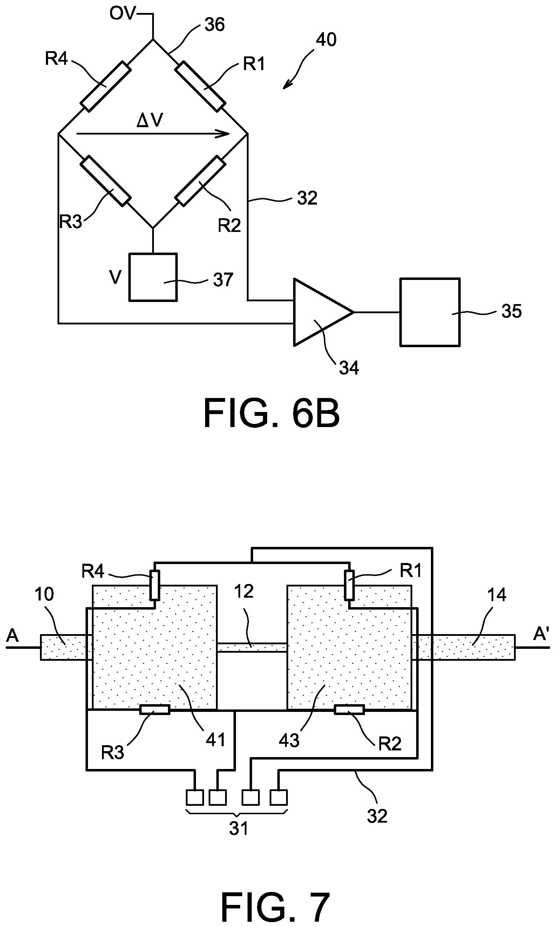

Les cavités 11, 13 peuvent chacune avoir, dans le plan ij, ou plan du dispositif, une forme circulaire ou une forme de disque (clairement représentée en figure 4A), dont le diamètre peut être de l'ordre de quelques millimètres, par exemple compris entre 1 mm et 10 mm. En variante ces cavités peuvent être carrées ou rectangulaires, cette variante est représentée schématiquement en figure 7 et sera commentée plus loin.

Les chambres ont une profondeur p, mesurée suivant la direction k, de l'ordre de quelques microns à quelques centaines de microns, par exemple comprise entre 10 $\mu$m ou 50 $\mu$m et 100 $\mu$m. De préférence les profondeurs, mesurées suivant la direction k, des chambres 11, 13 et du canal 12 sont voisines ou identiques. Pour former une restriction plus étroite la profondeur du canal 12 pourra être inférieure à celle des cavités 11, 13. La perte de charge produite par la restriction est d'autant plus grande que la restriction est de faible section. Ainsi, la différence de pression du fluide dans les chambres 11 et 13 est d'autant plus élevée. Cela accroît la précision de la mesure du débit du fluide entre les deux chambres, comme cela sera ultérieurement décrit. Cette variante est schématisée sur la figure 3 par un canal 12 dont le fond est en traits interrompus.

Le canal 12 peut avoir une largeur, mesurée suivant un axe parallèle à l'axe i, perpendiculaire à la direction Fe-Fs de circulation d'un fluide dans le dispositif, de quelques dizaines de microns, par exemple comprise entre 10 $\mu$m et 50 $\mu$m.

Une telle structure peut être réalisée dans 2 substrats 20, 30 superposés et assemblés entre eux.

Chacun de ces substrats a une épaisseur par exemple comprise entre 100 $\mu$m et quelques centaines de $\mu$m,

par exemple entre 100 μm et 500 μm.

Chacun de ces substrats s'étend dans le plan ij, perpendiculairement à l'axe k. Pour cette raison, on appelle également le plan ij plan du dispositif ou plan principal du dispositif. L'axe j est suivant une direction alignée avec le sens de circulation d'un fluide dans le dispositif et l'axe i lui est perpendiculaire. L'épaisseur de chaque substrat, mesurée suivant cet axe z, peut, dans certains cas, être très petite devant les extensions latérales du dispositif, c'est-à-dire devant les dimensions L et l de dispositif mesurées dans le plan ij ; L (mesurée selon l'axe j) est par exemple comprise entre quelques mm, par exemple 2 mm ou 5 mm, et quelques cm, par exemple 2 cm ou 5 cm, et l (mesurée selon l'axe i) est par exemple de l'ordre de ...1 cm, par exemple comprise entre quelques mm, par exemple encore 2 mm ou 5 mm et quelques cm, par exemple encore 2 cm ou 5 cm..

Les substrats 20, 30 peuvent être chacun en un matériau semi-conducteur, par exemple en silicium, ou en un autre matériau tel qu'un verre, ou un métal, ou un polymère, ou un plastique. Le Silicium est préféré car il est compatible avec des microtechnologies de fabrication collectives et précises. De plus, ce matériau a de bonnes propriétés mécaniques de résistance et de vieillissement. Dans le cas où le matériau est du Silicium, les substrats sont liés entre eux par exemple par assemblage moléculaire, ou par collage, par exemple collage par sérigraphie. Le scellement moléculaire a l'avantage de ne pas nécessiter l'ajout d'une colle.

Une mesure de perte de charge d'un fluide circulant dans les cavités 11, 12, 13, comme indiqué sur la figure 3, est réalisée à l'aide de moyens de mesure de la déformation de la membrane sur laquelle ou dans laquelle ces moyens sont formés. Autrement dit, chaque membrane 11', 13', disposée au dessus d'une cavité 11, 13, ou formant une paroi pour ladite cavité, est munie de moyens de mesure, par exemple d'au moins une jauge, qui sont formés sur ou dans cette membrane 11', 13'. Les 2 portions de membrane 11', 13' sont de préférence identiques (même géométrie, même dimension, même raideur). Ces membranes sont, par contre, libres de moyens pour activer le dispositif en tant que pompe : les moyens d'activation de la pompe sont associés à d'autres cavités, comme décrit plus loin. Ainsi, les déformations dues à l'actionnement des moyens d'activation de la pompe et les moyens formant jauges des cavités 11, 13 sont décorellés, ce qui permet d'éviter de mettre en oeuvre un traitement de signal complexe et d'induire des imprécisions de mesure.

Dans un exemple, une seule jauge et disposée au-dessus de chaque cavité 11, 13. Chaque jauge est alors assimilée à une résistance et peut être associée à des moyens de mesure de sa propre résistance., ce qui permet de mesurer ou d'évaluer les variations de pression dans chaque cavité.

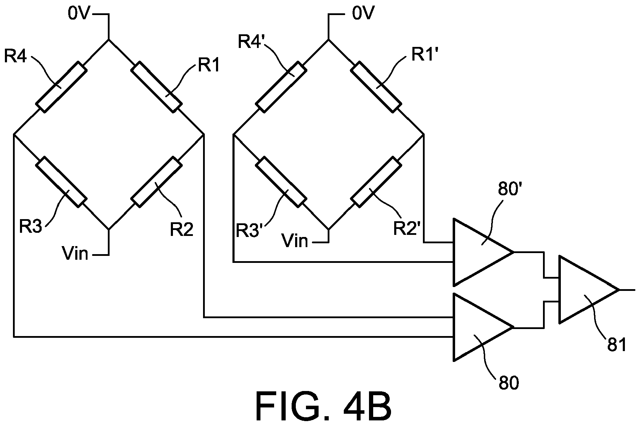

Selon un deuxième exemple, illustré en figures 4A et 4B, chaque membrane est munie d'un ensemble de 4 jauges, formant un pont de Wheastone. Autrement dit, à chacune des cavités 11, 13 est associée un ensemble de 4 résistances R1 - R4 et R'1 - R'4. Les résistances R1 - R4 associées à la première cavité 11 sont disposées en pont de Wheastone. Il en va de même pour les quatre résistances R'1 - R'4 associées à la deuxième cavité 13.

Dans l'exemple illustré en figure 4A, les 4 jauges associées à chacune des cavités sont disposés parallèlement entre elles, et parallèlement au sens d'écoulement du fluide. Sur la figure 4B, on a en outre représenté les moyens 80, 80', 81 d'amplification et de traitement des données issues directement des deux ponts.

Quelle que soit la configuration des jauges ou des résistances, la mesure électrique aux bornes des deux ponts des Wheatstone permet de mesurer la pression respective dans les cavités 11, 13. La différence de ces deux mesures de pression permet de connaitre la perte de charge crée par le canal 12.

Comme on le voit sur la figure 4A, ce montage nécessite au moins 8 plots 76 de connexion.

Le montage électrique de cet ensemble est représenté schématiquement en figure 4B. La chaine de mesure d'un pont de Wheatstone comporte un amplificateur 80, 80' et un convertisseur analogique/numérique. Avec deux ponts, comme sur les figures 4A et 4B, on amplifie deux mesures et on en déterminer la différence. Celle-ci peut être calculée après conversion analogique mais, pour minimiser la dégradation de l'information il est préférable de déterminer la différence avant la conversion analogique. La chaine de mesure peut alors comporter 3 amplificateurs différentiels 80, 80', 81, chacun devant être alimenté avec des moyens d'alimentation.

Mais ce type de montage peut se révéler encombrant et impliquer une consommation électrique importante.

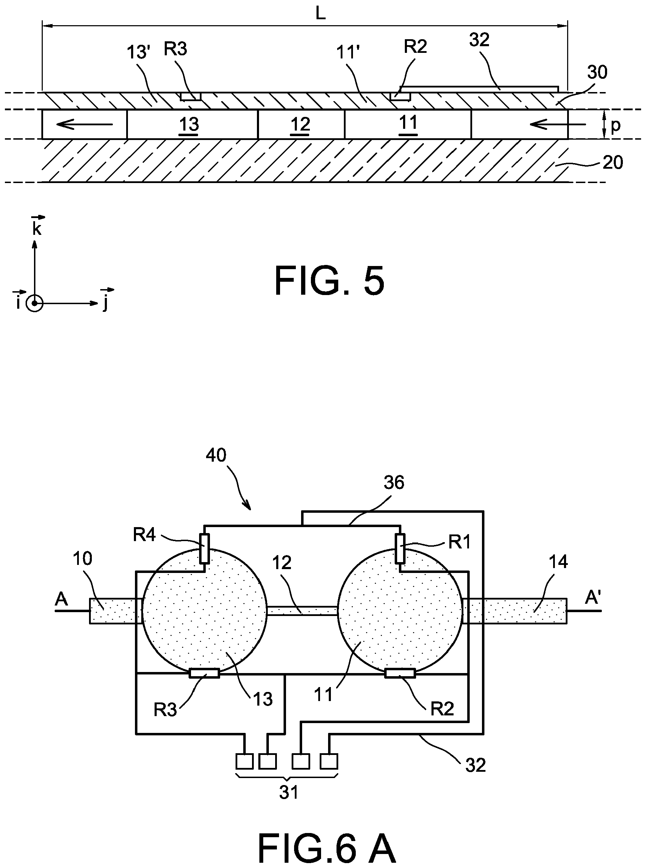

Il y a donc un autre montage possible, comme schématisé en figures 5 et 6A-6B, comportant 2 jauges (R3, R4) sur, ou dans, la première membrane 11' et 2 jauges (R1, R2) sur, ou dans, la deuxième membrane 13'. Cette configuration permet, lorsque qu'il existe une différence de pression entre les deux membranes, d'avoir une valeur de sensibilité optimum par rapport aux variations respectives de la valeur des 4 résistances formant le pont.

Par ailleurs, avec deux ponts de Wheatstone (cas des figures 4A et 4B) la mesure s'effectue à deux instants différents, à moins de dupliquer toute la chaine de mesure et de faire la différence de mesure des deux ponts simultanément, ce qui est difficile à réaliser. Avec un seul pont à mesurer (cas des figures 6A et 6B), il n'y a pas de problème de synchronisation et on peut mesurer un débit instantané avec une meilleure précision. En particulier, une pompe péristaltique génère, en général, des débits en forme d'impulsions très courtes et il est avantageux d'avoir une bonne définition de l'intensité maximale et de la largeur temporelle des impulsions.

De préférence, l'orientation des 4 jauges de contraintes est telle que la mesure du débit soit la plus sensible. Par exemple, si les membranes 11', 13' ont chacune une forme circulaire, représentée en figure 6A, l'une des jauges de chaque membrane est placée sur une direction radiale de celle-ci (R4 ou R1 sur la figure), tandis que la deuxième (R2 ou R3) est placée suivant une direction angulaire, ou est placée de manière à former (les orientations relatives indiquées sont à considérer en projection sur un plan défini par le couple de vecteurs (i, j), ou sur un plan parallèle au plan principal du dispositif), un angle, ici sensiblement voisin d'un angle droit, avec le rayon du cercle formé par la membrane, à l'endroit où cette jauge est disposée. Une jauge d'une membrane est disposée dans le sens d'écoulement d'un fluide, tandis que l'autre jauge de cette même membrane lui est sensiblement perpendiculaire.

La figure 7 (cas de cavités de forme carrée) reproduit la même disposition., avec une jauge d'une membrane disposée dans le sens d'écoulement d'un fluide, tandis que l'autre lui est sensiblement perpendiculaire.

Dans le cas des figure 6A et 6B, chacune des jauges est de préférence localisée au voisinage du bord, ou de l'encastrement (dans le substrat dans lequel elle est réalisée) de la membrane correspondante, là où la contrainte est maximum (là encore, en projection dans un plan (i, j) ou dans un plan parallèle au plan principal du dispositif.

Comme on le voit sur les figure 6A et 6B, les jauges R1 - R4 sont reliées entre elles par des lignes électriques 36, de manière à ce que l'ensemble forme un pont de Wheastone. Les sommets du pont sont reliés à des plots de contact 31, ce qui permet de connecter le débitmètre à un système électronique de mesure 34, 35, comportant un amplificateur 34.

Dans les divers cas exposés ci-dessus, la sortie du système (par exemple la sortie de l'amplificateur 80 pour la figure 4B, ou la sortie des moyens 35 pour la figure 6B) peut être connectée à des moyens de mémorisation et/ou de traitement des données (et notamment les variations des résistances des jauges), par exemple des moyens de type microprocesseur, par exemple encore des moyens informatiques. Ces moyens permettent de calculer la valeur du débit. Un écran de visualisation (non représenté sur les figures) permet à un opérateur de voir l'évolution de données de débit au cours de la circulation d'un fluide.

Par rapport à une structure telle que celle des figures 4A et 4B, un dispositif de mesure du type des figures 6A et 6B permet de réduire le nombre de connections électriques entre le capteur et son électronique associée (4 connexions 31 au lieu de 8 connexions 76, chaque connexion correspondant à un sommet d'un pont).

Un autre avantage de cette structure des figures 6A et 6B est la réduction de l'énergie consommée par la mesure. En effet, chaque pont est alimenté électriquement et le fait de passer de 2 ponts (chaque pont associé à une chambre) à 1 seul pont permet de diviser par deux la consommation d'énergie nécessaire à la mesure.

Le câblage des jauges d'un tel dispositif est lui aussi beaucoup plus simple que celui des figures 4A et 4B, ce qui simplifie la chaine de mesure. En outre un seul amplificateur 34 (figure 6B) est nécessaire. Ceci représente un gain de place et une minimisation de consommation électrique : dans une configuration avec deux ponts, donc avec 3 amplificateurs 80, 80', 81, chaque amplificateur doit être alimenté. Par ailleurs le fait d'effectuer la mesure différentielle avant la chaine de mesure permet de réduire le risque de dégradation d'information et donc de minimiser l'incertitude de mesure liée à l'électronique du débitmètre.

Ces différents avantages sont particulièrement recherchés pour des applications médicales (implantables) où il est impératif de réduire la taille de l'électronique, de simplifier le traitement d'information et de réduire la consommation électrique, tout en gardant un niveau de sensibilité optimum. Par ailleurs, pour des débits avec des transitoires rapides (par exemple une pompe à membrane et clapet génère des pulses de débits) le calcul de la différence des mesures sur deux ponts de Wheatstone peut impliquer un traitement de signal complexe afin de ne pas perdre en sensibilité, ce problème ne se pose plus avec une mesure de débit à un seul pont de Wheatstone, comme sur las figures 6A et 6B.

On a représenté, en figure 7, une variante dans laquelle les cavités 41, 43 ont une forme, dans le plan du dispositif, sensiblement carrées ou rectangulaires dont chaque côté est par exemple de l'ordre de quelques millimètres, par exemple compris entre 1 mm et 10 mm. Les autres références sur cette figure désignent des éléments identiques ou similaires à ceux qui ont déjà été décrits ci-dessus avec les autres figures. Une vue en coupe, selon l'axe AA', est identique à celle de la figure 5, et le schéma électrique de montage du pont de mesure est identique à celui décrit ci-dessus en liaison avec la figure 6B.

Les autres considérations ci-dessus, relatives aux dimensions des divers éléments de dispositif, aux matériaux qui peuvent être mis en oeuvre, et aux moyens de mesure des données s'appliquent à cette variante.

Dans les divers cas présentés ci-dessus, chaque jauge est de préférence en un matériau conducteur ou en un matériau semi-conducteur dopé. Elle est par exemple en or, ou en aluminium, ou en titane, ou en platine, ou en un alliage (par exemple AlSi). De préférence, on choisit un matériau conducteur présentant un facteur de jauge élevé, par exemple le platine. En variante on réalise les jauges en un matériau semi-conducteur dopé tel que, par exemple, le silicium dopé p obtenu par implantation d'ions bore. Un capteur réalisé à l'aide de jauges en matériau semi-conducteur (par exemple du silicium dopé Bore à un dosage de quelques $10^{19} at. cm^{-3}$) offre une sensibilité 50 à 100 fois plus grande qu'un capteur utilisant des jauges métalliques.

Chacune des jauges peut être de forme allongée, avec une largeur de quelques microns, pouvant être comprise entre 1 $\mu$m et 9 $\mu$m ou 10 $\mu$m, et une longueur de quelques dizaines de microns, pouvant être comprise entre 10 $\mu$m et 100 $\mu$m.

Dans le cas des figures 3-6B, les 4 résistances R1, R2, R3, R4 ont de préférence des valeurs nominales (c'est-à-dire sans déformation) identiques R0.

Si le matériau des substrats dans lesquels le dispositif est réalisé est du silicium, les jauges de contraintes sont de préférence orientées suivant les directions <010> du réseau cristallin du silicium. Cela permet de maximiser l'effet piézoresistif : les jauges sont alors plus sensibles. D'autres capteurs de déformations peuvent être présents sur les membranes 11', 13', par exemple afin de mesurer la pression dans l'une ou l'autre des membranes.

Lorsqu'un fluide s'écoule dans l'ensemble du réseau formé par la première chambre 11, le canal 12, la deuxième chambre 13, la perte de charge générée par la restriction 12 induit une différence de pression entre les cavités 11 et 13.

Si on désigne par Pa et Pb les pressions respectives dans les chambres 11 et 13, la perte de charge générée dans la restriction 12 est de préférence plus grande que la perte de charge générée dans les autres canaux ou dans les chambres.

A titre d'exemple on rappelle que pour un canal à section carré de coté d, et de longueur L la perte de charge s'écrit: $\Delta P = 28,4 \dfrac{\mu L}{d^2} \langle Q \rangle$ où $\mu$ est la viscosité du liquide et Q est le débit de l'écoulement. Pour simplifier on utilisera la relation suivante :

$$Pa-Pb=\alpha Q, \qquad (eq\ 1)$$

où Q désigne le débit dans le débitmètre et $\alpha$ un coefficient fonction de la géométrie de la restriction 12 et de la viscosité du fluide. Cette formule est donc applicable pour toute géométrie de la section du canal suivant l'axe j (ou dans le plan ik).

Sous l'action de la pression, les membranes 11', 13' en regard de chaque cavité 11, 13 se déforment. Le matériau formant les membranes ayant un comportement sensiblement élastique, on a, au premier ordre, une relation linéaire entre la pression et la déformation des membranes, et donc une relation linéaire entre la variation relative de la résistance de chaque jauge et la pression dans la cavité correspondante.

Soit K cette relation de proportionnalité ( $\dfrac{\Delta R}{R} = KP$ ) . La valeur de K est fonction de la raideur des membranes, de la position de la jauge, et des propriétés piezorésistives de la jauge. Le coefficient K dépend aussi de l'orientation de la jauge. Si 2 jauges sont disposées suivant les orientations des figures 6A et 6B, donc de manière axiale et angulaire, elles vont présenter des coefficients K de signes opposés. Ainsi pour les résistances de la première membrane 11' de la figure 6A, soumise à une pression Pa, on a :

$$R4 = R0(1 - KPa)$$

$$R3 = R0(1 + KPa)$$

De même, pour la deuxième membrane 13' de la figure 6B, soumise à une pression Pb on a :

$$R1 = R0(1 - KPb)$$

$$R2 = R0(1 + KPb)$$

Le pont est alimenté par des moyens 37 d'alimentation en tension V. Le déséquilibre, c'est-à-dire la différence de potentiel $\Delta V$ du pont de Wheatstone est donné par la relation :

$$\frac{\Delta V}{V} = \frac{R_1 R_3 - R_2 R_4}{(R_1 + R_2)(R_3 + R_4)}$$

(au signe près suivant la convention des signes des tensions).

Les variations de résistance étant beaucoup plus petites que la valeur nominale des jauges ($\Delta R \ll R0$) on obtient l'équation (2) suivante :

$$\frac{\Delta V}{V} = \frac{K}{2}\left(Pa - Pb\right)$$

En combinant les équations (1) et (2) on trouve :

$$\frac{\Delta V}{V} = \frac{K}{2}\alpha Q$$

Cette dernière équation montre que la configuration en pont de Wheatstone décrite ci dessus permet de donner une relation directe entre le débit Q, et la différence de potentiel ΔV mesuré aux bornes du pont de Wheastone.

Pour les autres orientations relatives des jauges, on adaptera ces formules.

Comme déjà expliqué ci-dessus, d'une façon générale, notamment dans les configurations des figures 6A et 6B, avec 2 jauges par membrane et par cavité, formant toutes les 4 un pont de Wheastone, il est préférable que les résistances ne soient pas toutes parallèles les unes des autres, et/ou que les résistances disposées sur ou dans une même membrane ne soient pas parallèles entre elles, et/ou que le pont de Wheastone formé par les quatre résistances comporte deux résistances successives parallèles l'une par rapport à l'autre.

D'une façon générale, il est préférable que les résistances ne soient pas toutes parallèles les unes des autres.

De plus, il est préférable que les résistances disposées sur ou dans une même membrane ne soient pas parallèles. Elles doivent avantageusement être perpendiculaires l'une par rapport à l'autre. Par exemple, une membrane peut comporter une résistance orientée radialement, l'autre résistance étant orientée selon tangentiellement.

Une autre condition préférentielle est que le pont de Wheastone formé par les quatre résistances comporte deux résistances successives parallèles l'une par rapport à l'autre.

Dans la configuration représentée sur la figure 4A, le premier pont de Wheastone R1, R2, R3 et R4 permet de mesurer la pression au niveau de la membrane 13, selon $\frac{\Delta R}{R} = KP$ . De la même façon, le deuxième pont de Wheastone R'1, R'2, R'3 et R'4 permet de mesurer la pression au niveau de la deuxième membrane 11. On estime alors le débit selon la relation de l'équation 1.

On explique maintenant les autres aspects d'une pompe comportant ces moyens de mesure de débit.

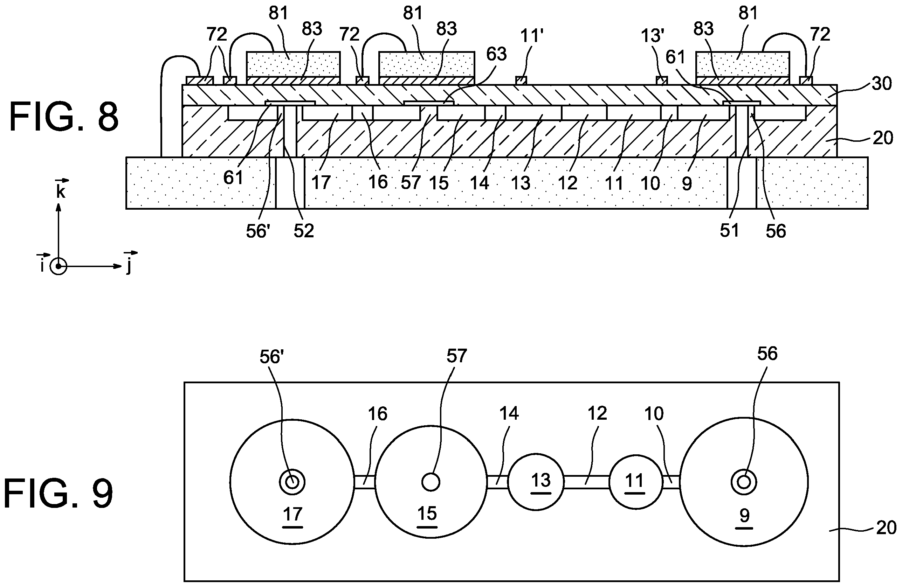

Comme on le voit sur la figure 8, une pluralité de cavités (ou chambres) 9, 11, 13, 15, 17 sont réalisées dans la face supérieure d'un premier substrat 20, ainsi que des conduits de communication 10, 12, 14, 16.

Par cavité, on entend un évidement ou une échancrure pratiqué(e) dans la surface d'un solide.

On peut noter qu'on peut avoir une réalisation avec seulement 3 chambres, une pour le pompage et 2 pour mesurer le débit, en d'autres termes, la configuration de la figure 8 sans les chambres 9 et 17 ; dans ce cas, on ajoute un clapet anti-retour au niveau du conduit d'entrée, et de préférence un clapet anti-retour à l'entrée et à la sortie..

Dans l'exemple de la figure 8, le dispositif comporte 5 cavités :

- une cavité 15, dite cavité centrale,
- deux cavités amont 9 et aval 17,
- deux cavités 11, 13, communiquant par un conduit 12, cet ensemble ayant la structure déjà décrite ci-dessus en liaison avec les figures 3 et 5.

Les cavités 15, 9, 17 peuvent présenter, en projection dans un plan (i,j) ou dans le plan principal du dispositif, la forme d'un disque, d'un anneau, d'un polygone, ou tout autre forme du même type, de quelques millimètres de diamètre ou de diagonale, par exemple 3 mm ou 6 mm, et d'une profondeur de l'ordre de quelques microns à quelques centaines de microns, par exemple comprise entre 1 μm ou 5 μm et 50 μm ou 100 μm ou 500 μm. En effet, on peut définir un taux de compression, correspondant au ratio entre le volume de fluide déplacé par la membrane et le volume de la cavité située en regard de la membrane. Il est préférable que ce taux de compression soit le plus important possible. Aussi, la profondeur d'une cavité est de préférence inférieure ou égale à 100 μm.

Le canal 12 a une largeur (mesurée perpendiculairement au sens d'écoulement des fluides, selon l'axe j) de quelques dizaines de microns (typiquement 50 μm ou compris entre 10 μm et 100 μm), alors que les autres canaux de communication 10, 14, 16 ont de préférence une plus grande largeur (quelques centaines de microns, par exemple comprise entre 50 μm et 500 μm). La profondeur des canaux 10 et 12 est de préférence identique à la profondeur des cavités 9, 11, 13, 15, 17.

Des conduits d'entrée 51 et de sortie 52 sont réalisés sous forme de puits débouchant, respectivement, à l'intérieur, respectivement, des cavités amont 9 et aval 17. Ils peuvent avoir un diamètre de l'ordre de quelques centaines de microns, par exemple compris entre 100 μm et 600 μm ou 900 μm, et une profondeur de l'ordre de quelques centaines de microns, par exemple comprise entre 100 μm ou 300 μm et 600 μm ou 900 μm.

Les conduits d'entrée 51 et de sortie 52 débouchent dans lesdites cavités par un orifice bordé d'une lèvre annulaire 56, 56'. Les lèvres peuvent présenter une hauteur sensiblement égale à la profondeur des cavités dans lesquelles elles sont situées.

Des dégagements 61, 62 sont réalisés dans la face inférieure du second substrat 30 ; ils viennent en regard des lèvres correspondantes 56, 56'. Ils peuvent être annulaires ou avoir une forme de disque, et présentent une faible profondeur, de l'ordre de quelques microns, par exemple 2 μm, ou de quelques dixièmes de micron, par exemple 0,1 μm.

Par dégagement, on entend un évidement ou une échancrure de faible profondeur, typiquement comprise entre 0,1 μm et 3 μm, au regard de celle des cavités, de l'ordre de quelques dizaines de microns, par exemple 50 ou 100 μm. Ainsi, la face inférieure 31I du second substrat 30 peut être considérée comme sensiblement plane. Le terme « sensiblement » désigne ici des variations d'épaisseur de ce substrat ne dépassant pas quelques microns, par exemple 3 μm.

Ces dégagements 61, 62 permettent de garantir, lors de l'étape ultérieure d'assemblage des substrats, que le sommet des lèvres 56, 56' ne touche pas la face inférieure du second substrat 30. De plus, ces dégagements assureront une communication fluidique, dans le cas d'une membrane non contrainte mécaniquement, entre les conduits d'entrée 51 et de sortie 52 et les cavités 9, 17 dans lesquelles ils débouchent.

Par ailleurs, un bossage 57 peut être réalisé dans la face supérieure du premier substrat 20 et localisé sensiblement au centre de la cavité centrale 31. Pour éviter le contact entre la face inférieure du second substrat 30 et le sommet du bossage 57, un dégagement 63 est avantageusement réalisé dans la face inférieure.

En variante, il est possible qu'il n'y ait pas de dégagements dans la face inférieure du second substrat 30, qui reste alors plane. La hauteur des lèvres 56, 56' est alors inférieure à la profondeur des cavités amont 9 et aval 17 dans lesquelles elles sont situées. Ainsi, le sommet des lèvres 56, 56' ne touche pas la face inférieure du second substrat. De plus, la communication fluidique, dans le cas d'une membrane non contrainte mécaniquement, entre les conduits d'entrée 51 et de sortie 52 et les cavités 9, 17 dans lesquelles ils débouchent est également assurée. De la même manière, il est possible que le bossage 57 ait une hauteur inférieure à la profondeur de la cavité centrale 15 dans laquelle il est situé.

De préférence, les premier et second substrats 20, 30 sont en silicium, et sont assemblés par scellement moléculaire. Ce type de scellement convient particulièrement à des assemblages de type Si-Si ou Si-verre. Cette technique est également appelée scellement par fusion, ou scellement direct.

Le second substrat 30 présente une face supérieure sensiblement plane et son épaisseur est sensiblement homogène. Le terme « sensiblement » couvre les éventuelles variations d'épaisseur de l'ordre de 0,1 μm à 3 μm provenant des dégagements 61-63 réalisés sur la face inférieure du second substrat 30.

Les moyens d'actionnement des membranes peuvent comporter des moyens piézoélectriques, par exemple sous forme de pastilles 81, disposées sur la face supérieure du second substrat 30, et disposées sur les membranes déformables des cavités 9, 15, 17. Elles reposent chacune sur un disque conducteur 83 et sont assemblées à ceux-ci à l'aide d'une colle conductrice. L'épaisseur des pastilles piézoélectriques peut être de l'ordre de la centaine de microns, par exemple 125 μm à 200 μm. Une présentation des matériaux piézoélectriques utilisables peut être trouvée dans l'article de Doll et al. intitulé « A novel artificial sphincter prothesis driven by a four-membrane silicon micropump », Sensor. Actuat. A-Phys., 2007, Vol. 139, 203-209.

Alternativement, les pastilles peuvent être obtenues après dépôt chimique en phase vapeur (CVD pour *Chemical Vapor Deposition*) ou du type sol-gel. Dans ce cas, l'épaisseur des pastilles peut présenter une épaisseur inférieure à 1 μm ou à quelques microns.

Des plots de contact 72 permettent d'assurer l'alimentation électrique de la micropompe avec le système extérieur. Les disques conducteurs 83 présentent un diamètre sensiblement égal à celui des pastilles piézoélectriques. Ce diamètre peut être de l'ordre de 0,5 à 0,85 fois le diamètre des cavités au regard desquelles les disques sont disposés.

Enfin, un fil électrique 84 est soudé à la face supérieure des pastilles piézoélectriques et connecté aux pistes conductrices. Ainsi, une tension électrique peut être appliquée, de manière indépendante, à chaque pastille piézoélectrique. La déformation d'une pastille piézoélectrique entraîne alors la déformation de la membrane déformable correspondante. Les pastilles piézoélectriques peuvent donc être utilisées comme moyen d'actionnement des membranes pour déformer celles-ci. Il est à noter qu'elles peuvent également être utilisées comme capteur pour mesurer le mouvement des membranes, ou leur position induite par la déformation.

Par ailleurs, les cavités 11, 13 sont chacune surmontée par une portion de membrane, constituée par une partie du substrat supérieur 30, et, sur cette portion, repose au moins une jauge 11', 13' comme expliqué ci-dessus en liaison avec les figures 3-7. Il peut y avoir plusieurs jauges, par exemple 4 jauges pour chacune des cavités 11, 13, comme explique ci-dessus en liaison avec les figures 3-4B ou 2 jauges pour chacune de ces cavités, comme explique ci-dessus en liaison avec les figures 5-6B.

Les connexions à ces jauges sont également réalisées en surface du substrat 30.

Ce type de système est représenté en figure 9 en vue de dessus. Des références identiques à celles des figures précédentes y désignent des mêmes éléments.

On y voit les différentes cavités, les conduits de communication, les lèvres 56, 56' et le bossage 57.

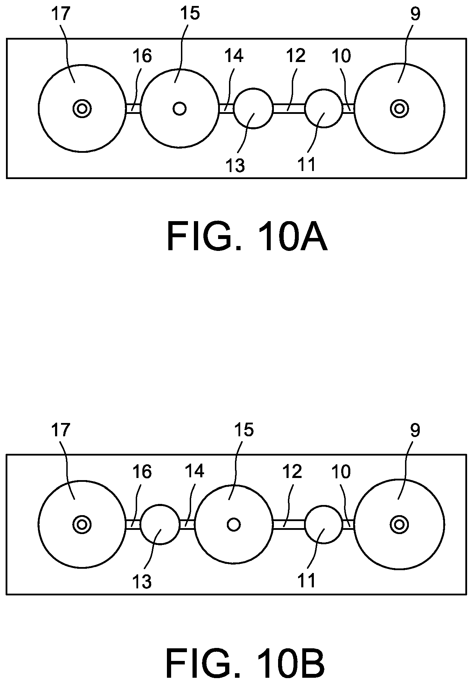

La figure 10A est une vue schématique de dessus de ce même système, où seules sont représentées les positions des différentes cavités et conduits de communication. On voit que les deux cavités 11, 13 du débitmètre sont disposées entre la vanne d'entrée 9 et la membrane principale 15 de pompage. De manière symétrique, non représentée, elles pourraient disposées entre la vanne de sortie 17 et la membrane principale de pompage 15.

La figure 10B représente une variante, dans laquelle les deux cavités 11, 13 du débitmètre sont disposées de part et d'autre de la membrane principale 15 de pompage, et la perte de charge est formée par les canaux 12, 14 et la chambre principale 15, la perte de charge générée par la chambre 15 étant négligeable par rapport à celle formée par les canaux 12 et 14. Pour cette variante, les lèvres, le bossage, le substrat supérieur, les jauges, les activateurs des membranes sont identiques à ceux décrits ci-dessus en liaison avec les figures 3-9, sauf pour les positions des deux chambres et également des jauges.

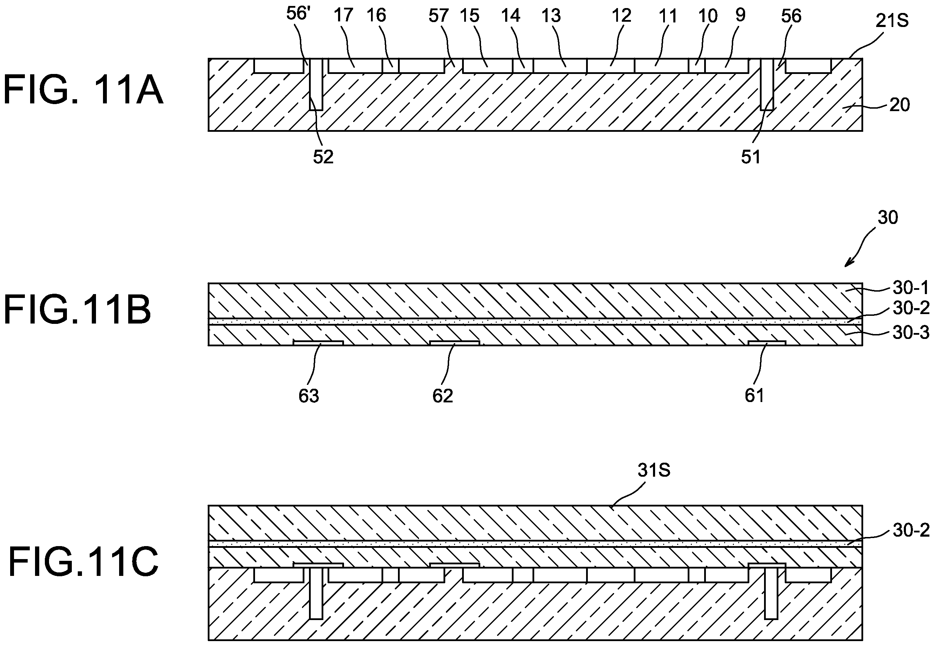

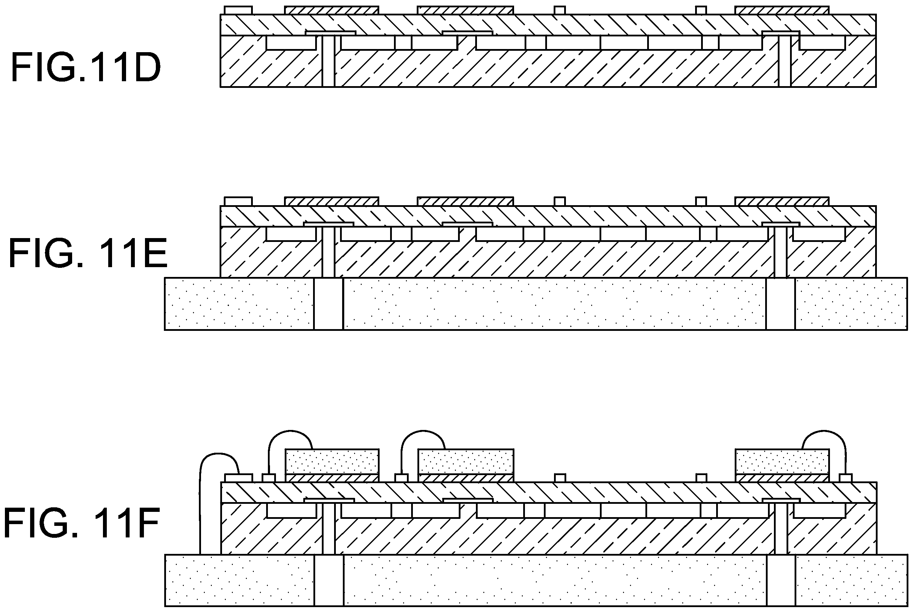

Les figures 11A à 11E illustrent, en coupe transversale, une micropompe à membrane déformable, pour différentes étapes d'un procédé de fabrication.

Les détails, dimensions, matériaux constitutifs de la structure réalisée ont été donnés ci-dessus.

On considère un premier substrat 20 (figure 11A) formé, par exemple, à partir d'une plaque de silicium polie double face.

On considère un deuxième substrat 30 (figure 11B) formé, par exemple, à partir d'une plaque de silicium sur isolant (SOI pour Silicon On Insulator). Une couche de $SiO_2$ 30-2 est ainsi présente entre deux couches supérieure 30-1 et inférieure 30-3 de silicium.

L'épaisseur des premier et second substrats est de l'ordre de quelques centaines de microns, par exemple comprise entre 100 $\mu$m et 700 $\mu$m.

La taille des premier et second substrats peut être de l'ordre de quelques millimètres à quelques centimètres. Chaque substrat peut par exemple former, dans le plan ij, un rectangle de 1 cm sur 3 cm.

L'épaisseur de la couche inférieure 30-3 de silicium du second substrat 30 est sensiblement égale à l'épaisseur des membranes déformables qui seront réalisées par la suite en vue de constituer la partie déformable de chacune des cavités. Cette épaisseur peut ainsi être de l'ordre de quelques dizaines à quelques centaines de microns, par exemple 10 $\mu$m à 300 $\mu$m, et de préférence 50 $\mu$m. Comme il sera détaillé plus loin, la couche inférieure 30-3 du second substrat permet de définir avec précision l'épaisseur des membranes déformables qui seront réalisées.

Selon une première étape, on réalise une pluralité de cavités 9, 11, 13, 15, 17 dans la face supérieure 21S du premier substrat 20, ainsi que des conduits de communication 10, 14, 16 et la restriction 12. On forme également les lèvres 56, 56' et le bossage 57.

Par cavité, on entend un évidement ou une échancrure pratiqué(e) dans la surface d'un solide.

Dans l'exemple illustré, 5 cavités sont ainsi obtenues, une cavité centrale 15, deux cavités amont 9 et aval 17, et deux cavités 11 et 13 qui sont connectées en série avec le reste du dispositif par l'intermédiaire des conduits de communication 10, 14. La cavité centrale 15 forme la chambre de pompage, les deux cavités amont 9 et aval 17 forment des vannes anti-retour et les cavités 11, 13 et le canal 12 vont permettre les mesures de débits.

Les conduits d'entrée 51 et de sortie 52 sont réalisés sous forme de puits débouchants, respectivement, à l'intérieur, respectivement, des cavités amont 9 et aval 17, mais, de préférence, non encore traversants vis-à-vis du premier substrat 20. Ils peuvent être situés au centre desdites cavités.

Les conduits d'entrée 51 et de sortie 52 débouchent dans lesdites cavités par la lèvre annulaire 56, 56'. Ces lèvres peuvent présenter une hauteur sensiblement égale à la profondeur des cavités dans lesquelles elles sont situées.

Par ailleurs, dans ce cas, les dégagements 61, 62, 63 sont formés dans la face inférieure 31I du second substrat 30, destinées à venir en regard des lèvres correspondantes 56, 56'.

La réalisation de ces divers éléments peut mettre en oeuvre des techniques classiques de microélectronique, par exemple par photolithographie suivie d'étapes de gravure. La gravure peut être réalisée par plasma du type RIE (*Rayonic Ion Etching*), ce qui permet d'obtenir des parois verticales. Par « vertical », on entend orienté suivant le vecteur k du repère (i,j,k).

Des variantes ont été expliquées, concernant l'absence de dégagements dans la face inférieure 31I du second substrat 30, et l'adaptation de la hauteur correspondante des lèvres 56, 56'. Ainsi, lors de l'étape ultérieure d'assemblage des substrats, le sommet des lèvres 16 ne touche pas la face inférieure 31I du second substrat. De la même manière, il est possible de réaliser un bossage 57 dont la hauteur est inférieure à la profondeur de la cavité 15 dans lequel il est situé. On adapte les étapes de réalisation de ces éléments en fonction des dimensions souhaitées. Par exemple, pour une technique de gravure, on adapte les formes de masques et/ou les durées de gravure.

On assemble ensuite lesdits substrats l'un à l'autre.

Si les premier et second substrats 20, 30 sont respectivement en silicium et en SOI, il est possible d'effectuer un assemblage par scellement moléculaire. Cette technique est également appelée scellement par fusion, ou scellement direct de silicium.

Cette étape d'assemblage par scellement moléculaire comporte une première phase de préparation des faces des substrats 20, 30 destinées à être assemblées, plus précisément de nettoyage et d'hydratation.

Les substrats 20, 30 sont ainsi nettoyés par un traitement humide tel que le nettoyage RCA, décrit notamment dans l'ouvrage précédemment cité de Maluf et Williams intitulé *« An introduction* to *microelectromechanical systems engineering* ». Cette technique de nettoyage permet d'obtenir des surfaces propres et non contaminées, présentant une forte densité de groupements OH.

Comme le montre la figure 11C, les substrats sont ensuite alignés puis mis en contact l'un avec à l'autre.

On effectue enfin un recuit de scellement à haute température pendant une durée déterminée. La température peut être comprise entre 500°C et 1250°C, par exemple de l'ordre de 1000°C et la durée de recuit peut être de l'ordre d'une heure. L'assemblage des substrats ainsi obtenu est alors solide et durable.

On comprend que, lors de l'étape d'assemblage, le second substrat 30 n'a pas encore subi d'étape de réalisation de membrane déformable. L'épaisseur du second substrat 30 est donc sensiblement identique à son épaisseur initiale, soit quelques centaines de microns. Les dégagements éventuellement réalisés 61, 62, 63 dans la face inférieure 31I présentent une profondeur négligeable par rapport à l'épaisseur totale du second substrat 30, et ne modifient donc pas la rigidité globale du substrat 30. Aussi, la manipulation du second substrat 30 avant et pendant l'étape d'assemblage présente des faibles risques de dégradation par cassure ou déchirure.

Par ailleurs, malgré la température élevée appliquée lors du recuit de scellement, les premier et second substrats 20, 30 présentent une épaisseur suffisante qui rend négligeable toute déformation thermique de leur part. L'espacement entre le sommet des lèvres du premier substrat 20 et la face inférieure 31I du second substrat 30 peut ainsi être très faible, par exemple de l'ordre du micron ou du dixième de micron, par exemple encore comme mentionné précédemment. Il n'y a donc pas de risque qu'à la suite d'une déformation thermique de l'un ou l'autre des substrats, les lèvres 56, 56' et la face inférieure 31I du second substrat 30 soient mises en contact mutuel de sorte qu'un scellement de ces surfaces ait lieu. Pour la même raison, l'espacement entre le sommet du bossage 17 et la face inférieure 31I peut également être de l'ordre du micron ou du dixième de micron.

Enfin, il est à noter que, lors de cette étape d'assemblage, les conduits d'entrée 51 et de sortie 52 peuvent ne pas être traversant, comme le montrent les figures 11C et 11D. Dans ce cas, l'étape d'assemblage est avantageusement effectuée sous vide. La pression ambiante peut être comprise, par exemple, entre quelques $10^{-4}$ mbar et quelques $10^{-2}$ mbar. Cela permet d'éviter que, par dilatation thermique de gaz emprisonnés dans le volume clos formé par les cavités 9, 11, 13, 15, 17 et les conduits 12, 14, 16 des surpressions importantes n'engendrent des contraintes mécaniques excessives à l'intérieur desdits substrats, mais également dans la zone d'assemblage entre les deux substrats.

On réalise ensuite les membranes déformables dans le second substrat.

Comme le montre la figure 11D, cette réalisation peut être effectuée par amincissement du second substrat 30 sur toute sa surface, à partir de sa face supérieure 31S.

Une première phase de polissage mécanique du type meulage peut être effectuée. Cette technique est notamment décrite dans l'article de Pei et al. intitulé « Grinding of silicon wafers: A review from historical perspectives », Int. J. Mach. Tool. Manu., 48 (2008), 1297-1307.

Le polissage peut être arrêté à quelques microns ou dizaines de microns au-dessus de la couche intermédiaire 30-2 de SiO2.

L'amincissement jusqu'à la couche intermédiaire 30-2 peut être obtenu par la technique connue du polissage mécano-chimique de type CMP (acronyme en anglais de *Chemical Mechanical Polishing*). Alternativement ou en combinaison avec cette technique, une gravure sèche de type RIE et/ou une gravure humide au moyen d'un bain de KOH ou de TMAH (tetramethylammonium hydroxide) peut(peuvent) être effectuée(s). Dans le cas de la gravure sèche ou humide, la couche de SiO2 présente l'avantage de servir de couche d'arrêt, ce qui permet de contrôler avec précision l'épaisseur finale de la membrane à former.

Enfin, la couche intermédiaire 30-2 de SiO2 du second substrat 30 peut être gravée par une gravure sèche de type RIE ou par attaque chimique à l'acide fluorhydrique (HF).

Comme l'illustre la figure 11E, le second substrat 30 présente alors une face supérieure 31S sensiblement plane et comprend essentiellement la couche inférieure 30-3 du SOI initial.

Le second substrat 30 ne présente pas de zones géométriquement définies destinées à former des membranes déformables. Du fait de son épaisseur, de l'ordre de quelques dizaines à quelques centaines de microns, par exemple 10 $\mu$m à 300 $\mu$m, et de préférence 50 $\mu$m, toute zone du second substrat est susceptible de former une membrane déformable. Néanmoins, les zones du second substrat 30 située en regard des cavités 9, 15, 17 sont destinées à former des membranes déformables pour la pompe et les zones en regard des cavités 11, 13 sont destinée à former des membranes déformables pour le capteur.

Il est à noter que l'étape d'amincissement peut être réalisée à la pression atmosphérique alors que les cavités forment encore un volume clos sous vide. Un effort de pression est alors appliqué sur la face supérieure 31S du second substrat 30, qui tend à provoquer une flexion de celui-ci à l'intérieur des cavités. Avantageusement, le bossage 57 disposé dans la cavité centrale 15 forme une butée pour le second substrat 30 et impose ainsi une limite à la flèche de flexion de celui-ci. Les lèvres 56, 56' situées dans les cavités amont 9 et aval 17 peuvent également former une butée pour le second substrat 30 et contribuent également à limiter la flexion maximale possible du second substrat.

Du fait de la planéité de la face supérieure 31S du second substrat 30, il est possible de réaliser sur cette face les étapes classiques de micro-fabrication telles que les étapes de dépôt, de photolithographie par dépôt de résine photosensible à la tournette, puis de gravure. Ces étapes permettent notamment de former les moyens de détection de la déformation des membranes utilisées pour les jauges du débitmètre. Ces moyens peuvent comporter une pluralité de jauges de contraintes, par exemple disposées sur ou dans un moins une partie de la membrane déformable en regard des cavités 11, 13, et, par exemple reliées électriquement entre elles en formant un ou deux ponts de Wheatstone. Ces jauges de contraintes peuvent être de type piézorésistif ou piézoélectrique.

Comme le montre la figure 11E, les moyens de détection peuvent être réalisés par un niveau conducteur réalisé sur la face supérieure 31S du second substrat 30. Ce niveau conducteur est réalisé par dépôt d'une couche métallique, par exemple d'un des matériaux déjà présentés ci-dessus. Ce niveau conducteur permet de polariser les pastilles piézoélectriques et de les connecter électriquement. On réalise également ainsi les connexions des jauges vers les moyens 35 ou 80, 80'.

En variante les jauges de contrainte sont réalisées dans un matériau semi-conducteur dopé tel que, par exemple, le silicium dopé p obtenu par implantation d'ions bore. Les avantages de cette variante ont déjà été exposés ci-dessus.

Les jauges sont réalisées directement dans le silicium des membranes. On peut aussi réaliser les jauges en déposant une couche de polysilicium à la surface des membranes. Une telle technique est présentée dans l'article de Malhaire et Barbier intitulé « Design of a polysilicon-on-insulator pressure sensor with original polysilicon layout for harsh environment », 2003, Thin Solid Films, 427, 362-366. La fabrication des capteurs piézoélectriques en silicium dopé est aussi décrite dans le document WO201092092A1.

Les capteurs peuvent comporter des jauges de contraintes réalisées sur la membrane, comme dans l'exemple de la figure 8.

En variante, les capteurs peuvent comporter des jauges de contraintes réalisées dans la membrane, comme dans les exemples des figures 3 et 5. Dans ce cas, des interconnexions, réalisées sur la membrane, relient électriquement les jauges de contraintes aux moyens de traitement de données. Une couche électriquement isolante (non représentée), par exemple à base d'un diélectrique tel que du $SiO_2$, peut être disposée sur le substrat, recouvrant ainsi les jauges de contraintes et les interconnexions.

D'autres capteurs de déformations peuvent être ajouté sur les autres membranes afin d'en mesurer leur déformation sous l'action des actionneurs, ou sous l'action de la pression dans la pompe.

De préférence, à ce stade, les conduits d'entrée 51 et de sortie 52 ne sont pas encore traversants. Une étape de gravure est alors réalisée sur la face inférieure 21I du premier substrat 20 pour rendre ces conduits traversants. L'ensemble est alors ouvert et communique avec l'environnement extérieur.

Cette étape est avantageusement réalisée au terme du procédé de fabrication. Cela permet d'éviter la contamination de l'intérieur du microcanal de la micropompe par toutes sortes de résidus ou d'impuretés. Le risque de bouchage ou de mauvais fonctionnement des vannes amont et aval est ainsi écarté.

Enfin, dans le cas où une pluralité de micropompes est fabriquée simultanément à partir d'une plaque formant le premier substrat et d'une seconde plaque formant le second substrat, les plaques sont découpées pour individualiser les micropompes ainsi fabriquées.

On présente maintenant des résultats expliquant l'intérêt d'un dispositif tel que décrit ci-dessus, avec débitmètre intégré avec une micropompe.

Dans les essais qui ont été menés, le débit généré par une pompe à membrane, du type décrit ci-dessus en liaison avec les figures...8, 9 et 6A, est mesuré par le débitmètre intégré. Les résultats sont comparés avec un second capteur (ou débitmètre externe), du commerce (Sensirion SLG1430-480, Switzerland), placé après la pompe, et relié à celle-ci par un tube. Ce tube est d'abord un tube souple, en un premier matériau (Tygon®), puis, dans un deuxième temps, est remplacé par un tube rigide, en un premier matériau (Teflon®) de diamètre et de longueur identiques à ceux du premier tube.

Pour ces deux expériences les mesures effectuées sont reportées :

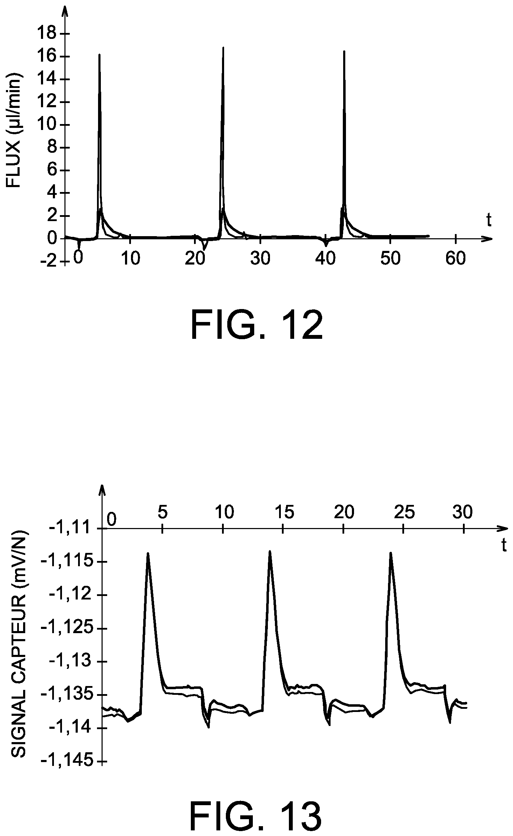

- en figure 12 pour le débitmètre extérieur à la pompe ;
- en figure 13 pour le débitmètre intégré.

Les courbes montrent l'évolution du signal du débitmètre pendant plusieurs cycles de pompage. Les fluctuations sont dues au principe de fonctionnement d'une pompe à membrane péristaltique.

Dans le cas de la figure 12 (débitmètre externe) les deux mesures donnent des signaux différents indiquant des débits instantanés différents.

Avec le tube rigide (Teflon®), les pics sont élevés et pointus alors qu'avec le tube souple (Tygon®), les pics sont peu élevés et larges. Ceci s'explique par le fait que le tube souple se déforme sous l'action des impulsions de pression générées par la pompe dans le circuit fluidique, modifiant ainsi le débit instantané au point de mesure.

Avec le débitmètre intégré, les deux expériences donnent des signaux très proches (les pic principaux sont de même amplitude et de même largeur).

On peut en conclure qu'on mesure, avec un débitmètre intégré, exactement le débit instantané dans la pompe, et que cette mesure n'est pas affecté par la connectique du circuit fluidique, et plus généralement, reste indépendante de l'impédance hydraulique de l'ensemble du système fluidique. Ainsi il devient beaucoup plus simple d'analyser les performances de la pompe en analysant l'évolution temporelle du débit instantané, car une modification de la forme des signaux indiquera une modification des performances de la pompe et non une modification des caractéristiques d'impédance hydraulique de l'ensemble du réseau fluidique qui peut évoluer au cours d'une expérience, et d'une expérience à l'autre.

Cette expérience montre que, grâce à un dispositif du type présenté ici, la mesure du débit et l'analyse des performances de la pompe est bien plus précise et plus simple qu'avec un débitmètre placé en amont ou en aval de la pompe.

Cette amélioration est particulièrement avantageuse dans un système de pompage comportant une partie jetable (cathéter, réservoir...) et une partie réutilisable (la pompe) ce qui est par exemple le cas de nombreux système de délivrance de médicament portable. Il est important d'avoir des informations sur l'état de la pompe (vieillissement) qui ne soient pas liées au reste du système fluidique. Avec un capteur de débit intégré à la pompe on peut analyser précisément les performances de la pompe, de manière continue pendant la délivrance de médicament, et à chaque fois que l'on change les parties consommables (réservoir et/ou cathéter) pour une nouvelle période d'injection, même si le nouveau cathéter et le nouveau réservoir présentent des impédances hydrauliques différentes. Il n'est donc pas nécessaire de recalibrer le débitmètre à chaque réutilisation.

Dans une micropompe selon l'invention, les différentes membranes déformables peuvent être des portions d'une même membrane ayant une épaisseur sensiblement constante, par exemple comprise entre 10 $\mu$m et 300 $\mu$m.

Une micropompe selon l'invention peut comporter un premier substrat et un second substrat assemblés l'un à l'autre, chacune des chambres étant réalisée dans le premier substrat, chaque membrane déformable étant réalisée dans le second substrat.

## Revendications

1. Micropompe à membrane déformable comportant :

   - une première chambre (15), dont une paroi comporte une première membrane déformable et des moyens d'actionnement (72, 81, 83) de cette première membrane,
   - une deuxième chambre (11) munie d'une deuxième (11') membrane déformable et une troisième chambre (13), munie d'une troisième (13') membrane déformable, la deuxième chambre et la troisième chambre étant reliées entre elles par un premier canal (12), au moins l'une d'entre elles étant reliée par un deuxième canal (12, 14) à la première chambre (15),

   **caractérisé en ce que** :

   - chacune des deuxième chambre et troisième chambre (11, 13) comporte des moyens (R1-R4, R'1-R'4) de détection pour détecter une déformation de la portion correspondante de membrane sous l'action d'un fluide circulant dans la micropompe, mais n'étant pas munie de moyens d'activation, ces moyens de détection de déformation, associées respectivement à la deuxième chambre et à la troisième chambre, formant des moyens de mesure de débit.

2. Micropompe selon la revendication 1, comportant en outre au moins une quatrième chambre (9, 17), reliée à l'une des autres chambres (11, 13, 15) et munie d'une quatrième membrane déformable et de moyens d'actionnement (81, 83, 72) de cette quatrième membrane.

3. Micropompe selon l'une des revendications 1 ou 2, comportant en outre :

   - une quatrième chambre (9), reliée à la deuxième chambre (11) par un canal (10) et munie d'une quatrième membrane déformable et de moyens d'actionnement (81, 83, 72) de cette quatrième membrane,
   - et une cinquième chambre (17), reliée à la première chambre (15) ou à la troisième chambre (13) par un canal (16), et munie d'une cinquième membrane déformable et de moyens d'actionnement (81, 83, 72) de cette cinquième membrane.

**4.** Micropompe selon la revendication 2 ou 3, la quatrième chambre et/ou la cinquième chambre, la quatrième membrane, et ses moyens d'actionnement, et/ou la cinquième membrane déformable, et ses moyens d'actionnement, formant une vanne ou deux vannes.

**5.** Micropompe selon l'une des revendications 2 à 4, un conduit (51, 52) débouchant à l'intérieur de la quatrième chambre (9, 17), et/ou de la cinquième chambre, par une ouverture bordée d'une lèvre (56, 56') en saillie à l'intérieur de ladite quatrième chambre, et/ou de la cinquième chambre, parallèlement à ladite quatrième membrane déformable, et/ou à ladite cinquième membrane déformable.

**6.** Micropompe selon l'une des revendications 1 à 5:

- chacune des deuxième chambre et troisième chambre (11, 13) étant munie de 4 jauges formant un pont de Wheastone ;
- ou bien chacune des deuxième chambre et troisième chambre (11, 13) étant munie de 2 jauges, ces 4 jauges formant un pont de Wheastone, et ayant éventuellement des valeurs nominales identiques.

**7.** Micropompe selon l'une des revendications 1 à 6 :

- la deuxième chambre et la troisième chambre (11, 13) étant toutes deux situées d'un même côté de la première chambre (15), l'une d'entre elles seulement étant reliée par le deuxième canal (14) à la première chambre,
- ou bien la deuxième chambre et la troisième chambre étant situées de part et d'autre de la première chambre, chacune étant reliée par un canal (12, 14) à la première chambre (15).

**8.** Micropompe selon l'une des revendications 1 à 7, les moyens (R1-R4, R'1-R'4) de détection pour détecter une déformation comportant :

- chacun au moins 2 jauges pour chacune des deuxième et troisième chambres, une des jauges étant placée suivant une direction perpendiculaire à la direction générale d'écoulement d'un fluide dans le dispositif, tandis que l'autre jauge est placée suivant une direction sensiblement parallèle à cette direction générale d'écoulement du fluide dans le dispositif ;
- et/ou au moins une jauge localisée au voisinage de l'encastrement ou du bord de la membrane correspondant à la chambre à laquelle cette jauge est associée ;
- et/ou chacun une jauge, en un matériau conducteur ou en un matériau semi-conducteur dopé ;
- et/ou au moins une jauge ayant une largeur comprise entre 1 $\mu$m et 10 $\mu$m et une longueur comprise entre 10 $\mu$m et 100 $\mu$m.

**9.** Procédé de réalisation d'une micropompe selon l'une des revendications 1 à 8, comportant les étapes suivantes :

a) on sélectionne un premier substrat (20) et un deuxième substrat (30) ;
b) on réalise les chambres (11, 13, 15) et le premier canal (12) dans le premier substrat (30),
c) on assemble le premier substrat (20) avec le deuxième substrat (30),
d) puis on réalise une membrane déformable (11', 13'), par amincissement du deuxième substrat (30),
e) on forme les moyens de détection, sur ou dans ladite membrane, des moyens de détection étant positionnés au dessus de la première chambre (11) et des moyens de détection étant positionnés au dessus de la deuxième chambre (13), et des moyens d'actionnement (72, 81, 83) de cette première membrane.

**10.** Procédé selon la revendication 9, la membrane déformable étant réalisée par amincissement du deuxième substrat (30) à partir de la face supérieure (31S) de celui-ci, par polissage mécanique, ou par polissage mécano-chimique et/ou par gravure.

**11.** Procédé selon la revendication 9 ou 10, le deuxième substrat (30) étant de type SOI, comportant un substrat semi-conducteur (30-1), une couche diélectrique (30-2) et une couche en matériau semi-conducteur (30-3).

**12.** Procédé selon l'une des revendications 9 à 11, comportant en outre une étape de réalisation d'au moins une quatrième chambre (9, 17), reliée à l'une des autres chambres (11, 13, 15) et munie d'une quatrième membrane déformable, et une étape de réalisation de moyens d'actionnement (72, 81, 83) de cette quatrième membrane.

**13.** Procédé selon l'une des revendications 9 à 12, comportant en outre une étape de réalisation de conduits d'entrée (51) et de sortie (52) dans le premier substrat (20).

**14.** Procédé selon la revendication 13, les conduits d'entrée (51) et de sortie (52) étant d'abord réalisés borgnes dans le premier substrat (20), puis étant rendus traversant après l'étape e), par amincissement du premier substrat.

**15.** Procédé selon l'une des revendications 9 à 14, les moyens de détection comportant des jauges réalisées par dépôt métallique sur la membrane ou par dopage d'un matériau semi-conducteur.

**Patentansprüche**

**1.** Mikropumpe mit deformierbarer Membran, umfassend:

- eine erste Kammer (15), von der eine Wand eine erste deformierbare Membran und Betätigungsmittel (72, 81, 83) für diese erste Membran umfasst,
- eine zweite Kammer (11), welche mit einer zweiten (11') deformierbaren Membran versehen ist, und eine dritte Kammer (13), welche mit einer dritten (13') deformierbaren Membran versehen ist, wobei die zweite Kammer und die dritte Kammer miteinander durch einen ersten Kanal (12) verbunden sind, wobei wenigstens eine von ihnen durch einen zweiten Kanal (12, 14) mit der ersten Kammer (15) verbunden ist,

**dadurch gekennzeichnet, dass**:

- jede aus der zweiten Kammer und der dritten Kammer (11, 13) Detektionsmittel (R1 - R4, R'1 - R'4) zum Detektieren einer Deformation des entsprechenden Membranabschnitts unter der Wirkung eines in der Mikropumpe strömenden Fluids umfasst, jedoch nicht mit Aktivierungsmitteln versehen ist, wobei die Detektionsmittel für eine Deformation, welche der zweiten bzw. der dritten Kammer zugeordnet sind, Mittel zum Messen eines Durchsatzes bilden.

**2.** Mikropumpe nach Anspruch 1, ferner umfassend wenigstens eine vierte Kammer (9, 17), welche mit einer der anderen Kammern (11, 13, 15) verbunden und mit einer vierten deformierbaren Membran und Betätigungsmitteln (81, 83, 72) dieser vierten Membran versehen ist.

**3.** Mikropumpe nach einem der Ansprüche 1 oder 2, ferner umfassend:

- eine vierte Kammer (9), welche mit der zweiten Kammer (11) durch einen Kanal (10) verbunden und mit einer vierten verformbaren Membran und Betätigungsmitteln (81, 83, 72) dieser vierten Membran versehen ist,
- und eine fünfte Kammer (17), welche mit der ersten Kammer (15) oder der dritten Kammer (13) durch einen Kanal (16) verbunden und mit einer fünften deformierbaren Membran und Betätigungsmitteln (81, 83, 72) dieser fünften Membran versehen ist.

**4.** Mikropumpe nach Anspruch 2 oder 3, wobei die vierte Kammer und/oder die fünfte Kammer, die vierte Membran und ihre Betätigungsmittel und/oder die fünfte deformierbare Membran und ihre Betätigungsmittel ein Ventil oder zwei Ventile bilden.

**5.** Mikropumpe nach einem der Ansprüche 2 bis 4, wobei eine Leitung (51, 52) in das Innere der vierten Kammer (9, 17) und/oder der fünften Kammer durch eine Öffnung mündet, welche durch eine Lippe (56, 56') eingefasst ist, welche in das Innere der vierten Kammer und/oder der fünften Kammer vorsteht, parallel zu der vierten deformierbaren Membran und/oder der fünften deformierbaren Membran.

**6.** Mikropumpe nach einem der Ansprüche 1 bis 5:

- wobei jede aus der zweiten Kammer und der dritten Kammer (11, 13) mit 4 Messeinrichtungen versehen sind, welche eine Wheatstone-Brücke bilden;
- oder jede aus der zweiten Kammer und der dritten Kammer (11, 13) mit 2 Messeinrichtungen versehen sind, wobei diese 4 Messeinrichtungen eine Wheatstone-Brücke bilden und gegebenenfalls identische Nominalwerte aufweisen.

**7.** Mikropumpe nach einem der Ansprüche 1 bis 6:

- wobei die zweite Kammer und die dritte Kammer (11, 13) beide an einer gleichen Seite der ersten Kammer (15) angeordnet sind, wobei die eine von ihnen nur durch den zweiten Kanal (14) mit der ersten Kammer verbunden ist,
- oder die zweite Kammer und die dritte Kammer beiderseits der ersten Kammer angeordnet sind, wobei jede durch einen Kanal (12, 14) mit der ersten Kammer (15) verbunden ist.

**8.** Mikropumpe nach einem der Ansprüche 1 bis 7, wobei die Detektionsmittel (R1 - R4, R'1 - R'4) zum Detektieren einer Deformation umfassen:

- jede wenigstens 2 Messeinrichtungen für jede aus der zweiten und dritten Kammer, wobei eine der Messeinrichtungen einer Richtung senkrecht zu der Haupt-Strömungsrichtung eines Fluids in der Vorrichtung folgend angeordnet ist, während die andere Messeinrichtung einer Richtung im Wesentlichen parallel zu dieser Haupt-Strömungsrichtung des Fluids in der Vorrichtung folgend angeordnet ist;
- und/oder wenigstens eine Messeinrichtung, welche benachbart zu der Einfassung oder dem Rand der Membran angeordnet ist, welche der Kammer entspricht, welcher diese Messeinrichtung zugeordnet ist;
- und/oder jeweils eine Messeinrichtung aus einem Leiter-Material oder aus einem dotierten Halbleiter-Material;
- und/oder wenigstens eine Messeinrichtung, welche eine Breite aufweist, welche zwischen 1 $\mu$m und 10 $\mu$m beträgt, und eine Länge aufweist, welche zwischen 10 $\mu$m und 100 $\mu$m beträgt.

**9.** Verfahren zum Herstellen einer Mikropumpe nach einem der Ansprüche 1 bis 8, umfassend die folgenden Schritte:

a) Auswählen eines ersten Substrats (20) und eines zweiten Substrats (30);
b) Bilden der Kammern (11, 13, 15) und des ersten Kanals (12) in dem ersten Substrat (30),
c) Verbinden des ersten Substrats (20) mit dem zweiten Substrat (30),
d) Anschließendes Bilden einer deformierbaren Membran (11', 13') durch Ausdünnen des zweiten Substrats (30),
e) Bilden der Detektionsmittel an oder in der Membran, wobei Detektionsmittel oberhalb der ersten Kammer (11) positioniert werden und Detektionsmittel oberhalb der zweiten Kammer (13) positioniert werden, sowie von Betätigungsmitteln (72, 81, 83) dieser ersten Membran.

**10.** Verfahren nach Anspruch 9, wobei die deformierbare Membran durch Ausdünnen des zweiten Substrats (30) ausgehend von der oberen Fläche (31S) davon, durch mechanisches Polieren oder durch mechanisch-chemisches Polieren und/oder durch Gravur durchgeführt wird.

**11.** Verfahren nach Anspruch 9 oder 10, wobei das zweite Substrat (30) vom SOI-Typ ist, umfassend ein Halbleiter-Substrat (30-1), eine dielektrische Schicht (30-2) und eine Schicht aus einem Halbleiter-Material (30-3).

**12.** Verfahren nach einem der Ansprüche 9 bis 11, ferner umfassend einen Schritt eines Bildens von wenigstens einer vierten Kammer (9, 17), welche mit einer der anderen Kammern (11, 13, 15) verbunden und mit einer vierten deformierbaren Membran versehen ist, und einen Schritt eines Herstellens von Betätigungsmitteln (72, 81, 83) dieser vierten Membran.

**13.** Verfahren nach einem der Ansprüche 9 bis 12, ferner umfassend einen Schritt eines Herstellens von Eingangs- (51) und Ausgangsleitungen (52) in dem ersten Substrat (20).

**14.** Verfahren nach Anspruch 13, wobei die Eingangs- (51) und Ausgangsleitungen (52) zunächst blind in dem ersten Substrat (20) hergestellt werden und dann nach dem Schritt e) durch Ausdünnen des ersten Substrats durchgehend gemacht werden.

**15.** Verfahren nach einem der Ansprüche 9 bis 14, wobei die Detektionsmittel Messeinrichtungen umfassen, welche durch metallische Ablagerung an der Membran oder durch Dotierung eines Halbleiter-Materials gebildet werden.

**Claims**

**1.** A micropump with a deformable membrane including:

- a first chamber (15), one wall of which includes a first deformable membrane and means (72, 81, 83) for actuating this first membrane,
- a second chamber (11) provided with a second deformable membrane (11') and a third chamber (13), provided with a third deformable membrane (13'), the second chamber and the third chamber being connected together through a first channel (12), at least one of them being connected through a second channel (12, 14) to the first chamber (15), **Characterised in that**:
- each of the second chamber and third chamber (11, 13) includes detection means (R1-R4, R'1-R'4) for detecting deformation of the corresponding membrane portion under the action of a fluid flowing in the micropump, but not being provided with activation means, said deformation detection means, respectively associated with the second chamber and third chamber, forming flow measurement means.

2. The micropump according to claim 1, further including at least one fourth chamber (9, 17) connected to one of the other chambers (11, 13, 15) and provided with a fourth deformable membrane and means (81, 83, 72) for actuating this fourth membrane.

3. A micropump according to one of claims 1 or 2, further comprising:

   - a fourth chamber (9), connected to the second chamber (11) through a channel (10) and provided with a fourth deformable membrane and means (81, 83, 72) for actuating this fourth membrane,
   - and a fifth chamber (17), connected to the first chamber (15) or to the third chamber (13) through a channel (16), and provided with a fifth deformable membrane and means (81, 83, 72) for actuating this fifth membrane.

4. The micropump according to claim 2 or 3, the fourth chamber and/or the fifth chamber, the fourth membrane, and its actuation means, and/or the fifth deformable membrane and its actuation means, forming one valve or two valves.

5. The micropump according to one of claims 2 to 4, a conduit (51, 52) opening into the inside of the fourth chamber (9, 17), and/or of the fifth chamber, through an aperture edged with a lip (56, 56') protruding inside said fourth chamber, and/or of the fifth chamber, parallel with said fourth deformable membrane, and/or with said fifth deformable membrane.

6. The micropump according to one of claims 1 to 5:

   - each of the second chamber and third chamber (11, 13) being provided with 4 gauges forming a Wheatstone bridge;
   - or else each of the second chamber and third chamber (11, 13) being provided with 2 gauges, these 4 gauges forming a Wheatstone bridge, and optionally having identical rated values.

7. The micropump according to one of claims 1 to 6:

   - the second chamber and the third chamber (11, 13) being both located on a same side of the first chamber (15), only one of them being connected through the second channel (14) to the first chamber,
   - or else the second chamber and the third chamber being located on either side of the first chamber, each being connected through a channel (12, 14) to the first chamber (15).

8. The micropump according to one of claims 1 to 7, the detection means (R1-R4, R'1-R'4) for detecting a deformation comprising:

   - each at least 2 gauges for each of the second and third chambers, one of the gauges being placed along a direction perpendicular to the general direction of flow of a fluid in the device, while the other gauge is placed along a direction substantially parallel to this general direction of flow of the fluid in the device;
   - and/or at least one gauge localized in the vicinity of the anchoring or of the edge of the membrane corresponding to the chamber with which this gauge is associated;
   - and/or each including a gauge, in a conducting material or in a doped semiconducting material;
   - and/or at least one gauge having a width comprised between 1 $\mu$m and 10 $\mu$m and a length comprised between 10 $\mu$m and 100 $\mu$m.

9. A method for making a micropump according to one of claims 1 to 8, including the following steps:

18

a) a first substrate (20) and a second substrate (30) are selected;

b) the chambers (11, 13, 15) and the first channel (12) are made in the first substrate (30),

c) the first substrate (20) is assembled with the second substrate (30),

d) and then a deformable membrane (11', 13') is made, by thinning the second substrate (30),

e) the detection means are formed, on or in said membrane, detection means being positioned above the first chamber (11) and detection means being positioned above the second chamber (13), and means (72, 81, 83) are formed for actuating this first membrane.

10. The method according to claim 9, the deformable membrane being made by thinning the second substrate (30) from the upper face (31S) of the latter, by mechanical polishing, or by mechano-chemical polishing and/or etching.

11. The method according to claim 9 or 105, the second substrate (30) being of the SOI type, includes a semiconducting substrate (30-1), a dielectric layer (30-2) and a layer in a semiconducting material (30-3).

12. The method according to one of claims 9 to 11, further including a step for making at least one fourth chamber (9, 17) connected to one of the other chambers (11, 13, 15) and provided with a fourth deformable membrane, and a step for making means (72, 81, 83) for actuating this fourth membrane.

13. The method according to one of claims 9 to 12, further including a step for making inlet (51) and outlet (52) conduits in the first substrate (20).

14. The method according to claim 13, the inlet (51) and outlet (52) conduits first being made blind in the first substrate (20), and then being made as through-conduits after step e), by thinning of the first substrate.

15. The method according to one of claims 9 to 14, the detection means including gauges made by metal deposition on the membrane or by doping of a semiconducting material.

FIG. 1

FIG. 2

FIG. 3

FIG. 4A

FIG. 4B

FIG. 5

FIG.6 A

FIG. 6B

FIG. 7

FIG. 8

FIG. 9

FIG. 10A

FIG. 10B

FIG. 11A

FIG.11B

FIG.11C

EP 2 702 275 B1

FIG.11D

FIG. 11E

FIG. 11F

EP 2 702 275 B1

FIG. 12

FIG. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050123420 A
- US 6446513 B1
- US 20050204828 A1
- FR 0957995
- WO 201092092 A1

**Littérature non-brevet citée dans la description**

- **NGUYEN et al.** MEMS-Micropumps: A Review. *J. Fluid. Eng.,* 2002, vol. 124, 384-392
- **R. E. OOSTERBROEK et al.** *Sensor Actuat a-Phys,* 1999, vol. 77, 167
- **DOLL et al.** A novel artificial sphincter prothesis driven by a four-membrane silicon micropump. *Sensor. Actuat. A-Phys.,* 2007, vol. 139, 203-209
- **PEI et al.** Grinding of silicon wafers: A review from historical perspectives. *Int. J. Mach. Tool. Manu.,* 2008, vol. 48, 1297-1307
- Design of a polysilicon-on-insulator pressure sensor with original polysilicon layout for harsh environment. *Thin Solid Films,* 2003, vol. 427, 362-366